# EUROPEAN PATENT APPLICATION

(11) **EP 4 549 402 A1**
(43) Date of publication of application: **07.05.2025**
(21) Application number: 24197167.0
(22) Date of filing: 29.08.2024
(51) Int. Cl.: C01G 53/51, C01G 53/82, H01M 4/505, H01M 4/525, H01M 10/054

(54) **POSITIVE ELECTRODE ACTIVE MATERIAL FOR SODIUM SECONDARY BATTERY, METHOD OF PREPARING THE SAME, AND SODIUM SECONDARY BATTERY INCLUDING THE SAME**

(30) Priority: 30.10.2023 KR 20230147290
(71) Applicant: ECOPRO BM CO., LTD., Cheongju-si, Chungcheongbuk-do 28117 (KR)
(72) Inventor: LEE, Myeong Joo, 28116 Cheongju-si, Chungcheongbuk-do (KR); LEE, Dongwook, 28116 Cheongju-si, Chungcheongbuk-do (KR); KIM, Da Mo A, 28116 Cheongju-si, Chungcheongbuk-do (KR)
(74) Representative: Beck & Rössig European Patent Attorneys

(57) **Abstract**

One embodiment of the present invention provides a positive electrode active material for a sodium secondary battery, including an O3-type sodium composite transition metal oxide containing at least sodium, a transition metal, and a doping metal, wherein the sodium composite transition metal oxide is a secondary particle in which a plurality of primary particles are aggregated, and an aspect ratio of the primary particle ranges from 1: 1 to 1:2.5.

## Description

### BACKGROUND

### 1. Field of the Invention

The present invention relates to a positive electrode active material for a sodium secondary battery, a method of preparing the same, and a sodium secondary battery including the same.

### 2. Discussion of Related Art

Lithium-ion secondary batteries have been widely used as energy storage devices in various electronic technology fields. Recently, as the demand for lithium-ion secondary batteries has rapidly increased, sodium-ion secondary batteries are attracting attention to replace lithium, an expensive metal.

Sodium-ion secondary batteries are one of the next-generation materials with high potential for application to secondary batteries because they have a similar intercalating/deintercalating reaction operating principle as lithium-ion secondary batteries. However, sodium-ion secondary batteries have difficulties in commercialization because they show lower performance in capacity, lifespan characteristics, and rate characteristics compared to lithium-ion secondary batteries, and the development of a positive electrode active material with high performance is essential in order to commercialize sodium-ion secondary batteries.

The positive electrode active material for sodium-ion secondary batteries is typically a layered transition metal oxide that has a simple structure, excellent electrochemical performance, and is easy to synthesize. Layered transition metal oxides are typically divided into O3-types and P2-types depending on their crystal structure, and the positive electrode active material based on the O3-type structure has a composition such as Naₓ(TM)O₂ (2/3 < x ≤ 1), and the positive electrode active material based on the P2-type structure has the composition Naₓ(TM)O₂ (x≤ 2/3).

In general, O3-type layered oxides have a higher energy density than P2-type layered oxide particles, but have the disadvantage of reducing cycle stability due to greater structural changes during the charge/discharge process, and P2-type layered oxides have relatively excellent cycle stability, but have disadvantages such as relatively low energy density due to low sodium content, making commercial application difficult.

However, O3-type oxide particles have problems such as reduced battery life and stability caused by gas generation due to electrolyte side reactions during battery operation due to sodium by-products present in the form of Na₂CO₃ and NaOH on the particle surface, and a decrease in the capacity and output of the positive electrode active material. O3-type oxide particles have a problem in that when they are washed with water to remove residual Na, all of the internal Na comes out and the structure cannot be maintained.

The present invention aims to improve the structural stability of O3-type positive electrode active materials to achieve high capacity and excellent lifespan characteristics.

### SUMMARY OF THE INVENTION

The present invention is directed to improving the structural stability of O3-type positive electrode active materials to achieve high capacity and excellent lifespan characteristics.

In addition, the present invention is directed to providing a method of preparing a positive electrode active material that may improve battery performance such as structural stability, capacity characteristics, and lifespan characteristics by performing calcining and Cu doping when preparing the positive electrode active material.

In addition, the present invention is directed to improving air stability and water stability and secondary particle breakage and structural collapse problems after washing with water by increasing the average particle diameter of a primary particle in a secondary particle O3-type layered oxide in which a plurality of primary particles are aggregated and synthesizing a Cu-doped transition metal oxide,

One embodiment of the present invention provides a positive electrode active material for a sodium secondary battery, including an O3-type sodium composite transition metal oxide containing at least sodium, a transition metal, and a doping metal, wherein the sodium composite transition metal oxide is a secondary particle in which a plurality of primary particles are aggregated, and an aspect ratio of the primary particle ranges from 1:1 to 1:2.5.

A ratio (D2/D1) of the average particle diameter (D2) of the secondary particle to the average particle diameter (D1) of the primary particles may range from 2.5 to 10.

The average particle diameter (D1) of the primary particles may range from 0.8 to 2.5 µm, and the average particle diameter (D2) of the secondary particles may range from 6 to 12 µm.

The doping metal may be copper (Cu).

The sodium composite transition metal oxide may be represented by the following Chemical Formula 1.

[Chemical Formula 1] Naₐ[CuₓM_{y}TM_{1-x-y}]O₂

In Chemical Formula 1, TM is at least one selected from Co, Ni, Mn, and Fe, M is at least one selected from P, Sr, Ba, Ti, Zr, W, Co, Mg, Al, Zn, Ce, Hf, Ta, F , Cr, V, Si, Y, Ga, Sn, Mo, Ge, Nd, B, Nb, and Gd, and 0.8<a<1.0, 0.01≤x≤0.1, 0≤y≤0.1, and 0.8≤1-x-y≤0.99..

The positive electrode active material may have a (003) peak full width at half maximum (FWHM) ranging from 0.1599 to 0.3399 at a 2θ of 15° to 17.5° in XRD analysis.

The positive electrode active material may have a residual Na content (TTS, total sodium) ranging from 100 to 3,000 ppm.

Another embodiment of the present invention provides a method of preparing a positive electrode active material for a sodium secondary battery, including: a process of calcining a transition metal hydroxide precursor; a process of dry mixing the calcined precursor prepared in the calcining process and a doping metal compound; and a process of mixing the metal-doped calcined precursor prepared in the dry mixing process and a sodium compound in an equivalent weight of Na/M (total metals excluding Na) = greater than 0.8 and less than 1, and then sintering the mixture.

The calcining process may be performed at a temperature of 700 to 1,100 °C in an oxidizing atmosphere.

In the dry mixing process, the doping metal compound may be an acetate compound, sulfide, nitride, phosphide, oxide, oxyhydroxide, hydroxide of copper (Cu), or a combination thereof.

The sintering process may be performed at a temperature of 800 to 1,100 °C.

The method may further include a process of washing the sodium transition metal oxide prepared in the sintering process with water.

Still another embodiment of the present invention provides a positive electrode for a sodium secondary battery including the positive electrode active material, and a sodium secondary battery including the positive electrode and a negative electrode.

### BRIEF DESCRIPTION OF THE DRAWINGS

The above and other objects, features and advantages of the present invention will become more apparent to those of ordinary skill in the art by describing exemplary embodiments thereof in detail with reference to the accompanying drawings, in which:
FIG. 1A shows the results of surface SEM-EDS (Scanning electron microscopy - Energy Dispersive X-ray Spectroscopy) mapping analysis of the positive electrode active material (secondary) particle prepared in Example 1, and FIG. 1B shows the results of cross-sectional SEM-EDS mapping analysis of the positive electrode active material (secondary) particles prepared in Example 1 and Comparative Example 1;
FIGS. 2A and 2B show the results of SEM comparative analysis of the positive electrode active material particles prepared in Example 1 and Comparative Examples 1 to 3 before and after washing with water;
FIG. 3 shows the results of XRD comparative analysis of the positive electrode active material particles prepared in Example 1 and Comparative Examples 1 to 3 before and after washing with water; and
FIG. 4 is a graph showing the residual Na content (TTS, total sodium) on the surface of the positive electrode active material after washing with water in Example 1 and Comparative Examples 1 to 3.

### DETAILED DESCRIPTION OF EXEMPLARY EMBODIMENTS

Advantages and features of the present invention and methods of achieving the same should become clear from embodiments described in detail below with reference to the accompanying drawings. However, the present invention is not limited to the embodiments disclosed below, but may be embodied in various different forms, the embodiments merely serve to complete the disclosure of the present invention and to fully inform the scope of the invention to those skilled in the art to which the invention pertains, and the present invention is defined only by the scope of the claims.

Unless otherwise defined, all terms (including technical and scientific terms) used in the present specification may be used with meanings commonly understood by those of ordinary skill in the art to which the present invention belongs. Throughout the specification, when a part is said to "include" a component, this means that the part may further include other components rather than excluding other components unless specifically stated to the contrary. A singular expression also includes a plural expression unless the context clearly indicates otherwise.

One embodiment of the present invention provides a positive electrode active material for a sodium secondary battery. The positive electrode active material includes an O3-type sodium composite transition metal oxide containing at least sodium, a transition metal, and a doping metal, wherein the sodium composite transition metal oxide is a secondary particle in which a plurality of primary particles are aggregated, and an aspect ratio of the primary particle ranges from 1:1 to 1:2.5.

It is generally known that the air stability of an O3 oxide positive electrode material is poor. Specifically, when exposed to air or in contact with water, a water oxidation reaction and H⁺/Na⁺ exchange occur, resulting in residual Na such as NaOH and Na₂CO₃ being generated on the surface. The generated CO₃ is embedded in a transition metal layer to form a CO₄ tetrahedron, which slows Na+ diffusion and deteriorates electrochemical properties. Therefore, the weakened bond between TM-O may be effectively controlled by the charge transfer between Na and O through the introduction of a doping metal, thereby establishing stronger Na₂O bond energy. It is structurally stable and has excellent air stability.

In addition, in the present invention, the calcined precursor is prepared by performing calcining at a high temperature to realize the aspect ratio of the primary particle, and then the doping metal is prepared by dry mixing so that the doping metal may be uniformly dispersed on the surface of the calcined precursor particle.

In the present invention, by using a calcined precursor oxidized and calcined at a high temperature, the size of the primary particle may increase, the specific surface area may decrease, and the density of aggregated primary particles in the secondary particles may increase. At this time, ① the bonding force between primary particles increases, and thus particle breakage may be improved even after washing with water, and the cohesion between primary particles is improved, and thus Na detachment from the crystal structure due to water washing damage is prevented. In addition, ② due to the nature of the doping metal used in a small amount, there is an effect of relatively increasing the doping dispersion on the surface of the primary particle with a reduced specific surface area and the surface of the secondary particle. Accordingly, compared to the existing purpose or effect of mainly improving surface properties through particle surface doping, in the present invention, the doping metal may be uniformly positioned inside the secondary particles and at the grain boundary of the primary particles, and the structural stability of the O3-type sodium composite transition metal oxide may be further improved.

In the present invention, specifically, the aspect ratio of the primary particle may be 1: 1 to 1:2.5, for example, 1:1 to 1:2.4, 1:1 to 1:2.3, 1:1 to 1:2.2, 1:1 to 1:2.1, 1:1 to 1:2, 1:1 to 1:1.9, 1:1 to 1:1.8, 1:1 to 1:1.7, or 1:1 to 1:1.6, preferably 1:1 to 1:1.5. In the present invention, during the oxidative calcination of the positive electrode active material precursor, the oxidative calcination may be performed at a high temperature to realize the aspect ratio range of the primary particle. In addition, the present invention can provide a positive electrode active material with improved energy density, high voltage stability, lifespan characteristics, and high rate characteristics by increasing the size of the primary particle constituting the secondary particles in the positive electrode active material and reducing the aspect ratio by performing calcination and doping stepwise under specific conditions,.

A ratio (D2/D1) of the average particle diameter (D2) of the secondary particle to the average particle diameter (D1) of the primary particle may be 2.5 to 10, for example, 2.5 to 8, 2.5 to 6, or 2.5 to 5. When the primary particle size ratio (D2/D1) is greater than 10, the size of the primary particle is excessively small, so the primary particle may not have been formed in terms of shape, and thus may not have an O3 structure, and by-products (impurities) may also be generated in large quantities. This result may be due to the fact that the calcination reaction was not performed smoothly or the O3 crystal structure was not generated, for example, calcination was performed at a low temperature, for a short time, and/or unevenly. Meanwhile, the primary particle size may be the major axis length.

The average particle diameter (D1) of the primary particle may be 0.8 to 2.5 µm, for example, 0.8 to 2.3 µm, 0.8 to 2 µm, 0.8 to 1.7 µm, or 1 to 1.5 µm. In addition, the average particle diameter (D2) of the secondary particle may be 6 to 12 µm, for example, 6 to 10 µm or 6 to 8 µm. The primary particles and the secondary particles included in the positive electrode active material may improve particle density in the positive electrode active material by satisfying at least the above conditions. Accordingly, the electrochemical properties of the positive electrode active material may be improved.

Meanwhile, the term 'aspect ratio' used herein refers to the ratio (length/width ratio) of the major axis (length) and minor axis (width) of the primary particle, and when the major axis represents the direction of a relatively long region of the primary particle, the minor axis is located on the same plane as the major axis and represents the length of a relatively short region. At this time, the primary particle may have a plate shape, which means that the length of the primary particle in the thickness direction is significantly smaller than the length of the primary particle in the plane direction (major axis and minor axis). Meanwhile, the minor axis may be in a direction that intersects the major axis in a perpendicular manner, and the 'aspect ratio' of the primary particle may be calculated as the ratio of the major axis and minor axis of the primary particle as measured from the surface of the primary particle.

Meanwhile, the present invention may have an aspect ratio, a primary particle size, and a ratio of a secondary particle size to a primary particle size (D2/D1), having the above-mentioned ranges in 50% or more, for example, 60% or 70% or more of the total number of the primary particles constituting the secondary particle, and the present invention may have an aspect ratio, primary particle size, and a ratio of a secondary particle size to a primary particle size (D2/D1), having the above-mentioned ranges in at least 10 or at least 20 primary particles among the primary particles constituting the secondary particle.

The doping metal may be copper (Cu). The Cu doping can replace some of Fe and Ni among transition metals and reduce the amount of Fe and Ni that migrates. In addition, the Cu doping may reduce the Jahn-Teller effect of Mn³⁺ by improving the average valence state of Mn through charge compensation. In addition, compared to the uniform doping of Co, Cu tends to be relatively unevenly doped due to its own characteristics, and in the present invention, there is an effect of relatively increasing the doping dispersion on the surface of the primary particle with a reduced specific surface area and the surface of the secondary particle. Therefore, the doping non-uniformity of Cu can be significantly improved. Accordingly, O3-type oxide particles have a problem in that when they are washed with water to remove residual Na, all of the internal Na comes out and the structure cannot be maintained, but the particles may improve air stability and water stability, and improve secondary particle breakage and structural collapse problems after washing with water.

Specifically, the sodium composite transition metal oxide may be represented by the following Chemical Formula 1.

[Chemical Formula 1] Naₐ[CuₓM_{y}TM_{1-x-y}]O₂

In Chemical Formula 1,
TM is at least one selected from Co, Ni, Mn, and Fe,
M is at least one selected from P, Sr, Ba, Ti, Zr, W, Co, Mg, Al, Zn, Ce, Hf, Ta, F, Cr, V, Si, Y, Ga, Sn, Mo, Ge, Nd, B, Nb, and Gd, and 0.8≤a≤1, 0.01≤x≤0.1, 0≤y≤0.1, and 0.8≤1-x-y≤0.99.

When the O3-type layered oxide has an Na equivalent weight of less than 0.80 (a<0.80), the oxide has a P3-type structure, and electrochemical properties may deteriorate depending on the arrangement of a lattice unit. Conversely, an Na equivalent weight greater than 1.0 (0. 1<a) reduces atmospheric and moisture stability and is sensitive to synthesis conditions such as temperature and atmosphere.

The positive electrode active material of the present invention may have a (003) peak FWHM of 0.1599 to 0.3399 at a 2θ of 15° to 17.5° in XRD analysis. The XRD analysis results may be the results analyzed after water washing to remove residual Na on the surface of the prepared positive electrode active material. Accordingly, the positive electrode active material may maintain its O3-type crystal structure without particle breakage or structural collapse even after removal of surface residual Na through water washing.

The positive electrode active material of the present invention may reduce the residual Na content (TTS, total sodium) to 100 to 3,000 ppm, specifically to 500 to 3,000 ppm. Accordingly, gas generation caused by residual Na may be suppressed, and battery life characteristics may be improved.

Meanwhile, the content of the residual Na (TTS, total sodium) may be a value obtained by separately calculating the total amount of only Na among compounds including residual Na (for example, NaOH or Na₂CO₃).

Another embodiment of the present invention provides a method of preparing a positive electrode active material for a sodium secondary battery.

The preparation method includes:
a process of calcining a transition metal hydroxide precursor;
a process of dry mixing the calcined precursor prepared in the calcining process and a doping metal compound; and
a process of mixing the metal-doped calcined precursor prepared in the dry mixing process and a sodium compound in an equivalent weight of Na/M (total metals excluding Na) = greater than 0.8 and less than 1, and then sintering the mixture.

The calcination process is a process of heat treating the transition metal hydroxide precursor at high temperature. When a transition metal is doped into a hydroxide precursor using a dry method without conventional calcination, particle breakage may occur in the oxide secondary particles or primary particles after heat treatment for sodium insertion in post-processing. This phenomenon is analyzed to be caused by organic elements such as acetates, sulfides, nitrides, and phosphides, or oxygen elements such as oxides, oxyhydroxides, and hydroxides among anionic groups included in the doping compound. In addition, when doping a transition metal using a wet method, the selection of the doping compound is limited and there is a problem of increased costs due to process complexity.

The calcination process may be performed in an oxidizing atmosphere at a temperature of 750 to 1,050 °C, preferably 800 to 1,050 °C, 800 to 950 °C, 850 to 1,000 °C, or 850 to 950 °C. When calcination is performed at a temperature higher than the above range, the size of the synthesized calcined precursor primary particle may become excessively large, limiting Na ion diffusion on the particle surface. Conversely, when calcination is performed at a temperature lower than the above range, the primary particles may not grow sufficiently, making it difficult to realize the desired primary particle aspect ratio. At this time, the calcination time is not particularly limited, but it may be desirable to perform the calcination process for 6 to 15 hours, 8 to 15 hours, or 8 to 13 hours.

When the calcination process is performed, the specific surface area and porosity of the calcined precursor decrease, the particle size of the plurality of primary particles within the secondary particles increases, and cohesion increases. Accordingly, the tap density of the calcined precursor is increased, and the problem of particle breakage that occurs when dry doping is performed without calcination may be prevented.

The transition metal hydroxide precursor may be represented by the following Chemical Formula 3, and the calcined precursor may be represented by the following Chemical Formula 4.

[Chemical Formula 3] TM(OH)₂

(TM is at least one selected from Co, Ni, Mn and Fe),

[Chemical Formula 4] (TM)O₄

(TM is at least one selected from Co, Ni, Mn and Fe).

The dry mixing process is a process of dry mixing the calcined precursor prepared in the calcination process and a doping metal compound. When dry doping is performed after the calcination process, the primary particle has a dense shape through calcination, and the bonding force between primary particles increases, thereby improving a metal doping effect (cohesion between primary particles). In addition, when Cu is doped without calcination, some structures are maintained after washing with water, but cracks are likely to occur between primary particles.

By applying the dry method, Cu may be uniformly doped on the surface and inside of the calcined precursor particles, whereas doping a transition metal using the wet method is undesirable because the selection of the doping compound is limited and there are increased costs due to process complexity.

The copper (Cu) compound may be an acetate compound, sulfide, nitride, phosphide, oxide, oxyhydroxide, hydroxide of copper (Cu), or a combination thereof.

The sintering process involves mixing the copper (Cu)-doped calcined precursor and a sodium compound in an equivalent weight of Na/M (total metals excluding Na) = greater than 0.8 and less than 1 to produce an O3-type sodium transition metal oxide, and then sintering the mixture.

The copper (Cu)-doped calcined precursor and the sodium compound may be mixed in an equivalent ratio of Na/M (total metals excluding Na) = greater than 0.8 and less than 1 or greater than 0.8 and less than 0.95. When the mixing amount of the sodium compound is within the above range, the prepared positive electrode active material may have an O3-type layered crystal structure, and thus may have higher energy density, high atmospheric and moisture stability, and may be less sensitive to synthesis conditions (temperature, atmosphere, and the like). In addition, in the above sodium content range, battery discharge capacity may be improved and unreacted remaining Na may be minimized.

The sintering may be performed at a temperature of 700 °C to 1,100 °C. When the sintering temperature is within the above range, the reaction between raw materials may sufficiently occur and particles may grow uniformly. The sintering may be more preferably performed at a temperature of 750 to 1,050 °C, 850 to 1,050 °C, or 900 to 1,000 °C. The sintering may be performed for 5 to 40 hours. When the sintering time is within the above range, a highly crystalline positive electrode active material may be obtained, the particles have an appropriate size, and production efficiency may be improved. The sintering may be more preferably performed for 5 to 20 hours, 5 to 18 hours, 8 to 15 hours, or 10 to 14 hours.

The sodium compound may be at least one selected from the group consisting of Na₂CO₃, NaOH, NaNO₃, CH₃COONa, and Na₂(COO)₂, and may preferably be Na₂CO₃, NaOH, or a combination thereof.

Still another embodiment of the present invention provides a positive electrode for a sodium secondary battery, including the positive electrode active material, and a sodium secondary battery.

The positive electrode includes a positive electrode current collector and a positive electrode active material layer located on the positive electrode current collector, and the positive electrode active material according to one aspect of the present invention is present in the positive electrode active material layer.

The positive electrode current collector is not particularly limited as long as it does not cause a chemical change in a battery and has conductivity, and for example, stainless steel, aluminum, nickel, titanium, sintered carbon, or aluminum or stainless steel whose surface is treated with carbon, nickel, titanium or silver may be used. In addition, the positive electrode current collector may typically have a thickness of 3 to 500 µm, and fine irregularities may be formed on the surface of the current collector, thereby increasing the adhesion of the positive electrode active material. For example, the positive electrode current collector may be provided in various forms such as a film, a sheet, a foil, a net, a porous body, a foam, a nonwoven body, etc.

In addition, the positive electrode active material layer may be a layer including the above-described positive electrode active material along with a conductive material and a binder.

Here, the conductive material is used to provide conductivity to the electrode, and may be used without particular limitation as long as it has conductivity without causing chemical changes in the positive electrode active material. Non-limiting examples of the conductive material may be graphite such as natural graphite or artificial graphite; a carbon-based material such as carbon black, acetylene black, Ketjen black, channel black, furnace black, lamp black, thermal black or a carbon fiber; a metal powder or metal fiber consisting of copper, nickel, aluminum, or silver; a conductive whisker consisting of zinc oxide or potassium titanate; a conductive metal oxide such as titanium oxide; or a conductive polymer such as a polyphenylene derivative. The conductive material may be typically included in an amount of 1% to 30 wt% based on the total weight of the positive electrode active material layer.

In addition, the binder is a material that serves to improve the adhesion between positive electrode active material particles and the adhesion between the positive electrode active material and the current collector. Non-limiting examples of the binder may be polyvinylidene fluoride (PVDF), a vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, an ethylene-propylene-diene polymer (EPDM), a sulfonated EPDM, styrene butadiene rubber (SBR), fluorine rubber, or various copolymers thereof. The binder may be typically included in an amount of 1% to 30 wt% based on the total weight of the positive electrode active material layer.

The positive electrode according to one embodiment of the present invention may be manufactured according to a conventional method of manufacturing a positive electrode for a sodium secondary battery, except for using the positive electrode active material described above. For example, a positive electrode may be manufactured by applying a slurry for forming a positive electrode active material layer including a positive electrode active material and, optionally, a binder and a conductive material onto a positive electrode current collector, and then drying and rolling it. According to another example, the positive electrode may be manufactured by casting the slurry for forming the positive electrode active material layer onto a separate support and then laminating the film obtained by peeling the positive electrode active material layer from the support onto the positive electrode current collector.

Yet another aspect of the present invention provides an electrochemical device including the above-described positive electrode. Here, the electrochemical device may be, specifically, a battery, a capacitor, and more specifically, a sodium secondary battery.

A sodium secondary battery includes a positive electrode, a negative electrode located opposite the positive electrode, a separator interposed between the positive electrode and the negative electrode, and an electrolyte. In addition, the sodium secondary battery may include a battery container (case) that accommodates an electrode assembly including the positive electrode, the negative electrode, and the separator, and a sealing member that seals the battery container.

At this time, depending on the shape of the battery container (case), the sodium secondary battery may be classified as a can-type sodium secondary battery in which the electrode assembly is built into a metal can and a pouch-type sodium secondary battery in which the electrode assembly is built into a pouch made of a sheet such as an aluminum laminate.

In particular, in the case of a pouch-type sodium secondary battery using a positive electrode including a positive electrode active material according to various embodiments of the present invention, as the possibility of side reactions between the positive electrode active material and the electrolyte is low, there is an advantage in that it is possible to improve stability during storage and/or operation and at the same time reduce gas generation.

Hereinafter, the present invention will be described in detail through examples, but these are intended to illustrate the present invention in more detail, and the scope of the present invention is not limited to the following examples.

### Examples

### (Example 1)

A Ni_{0.33}Fe_{0.33}Mn_{0.33}(OH)₂ NFM11 precursor was put into an alumina crucible, then oxidized and calcined at 950 °C for 6 hours in an air atmosphere, and then cooled to room temperature to prepare a calcined precursor (Ni-Fe-Mn)O₄.

Dry doping was performed by mixing the prepared calcined precursor and Cu(OH)₂ at Cu/M (M=Ni+Fe+Mn+Cu) = 2 at.% using a hand mixer.

A mixture was obtained by mixing the prepared 2 at.% Cu doped calcined precursor and Na₂CO₃ at an equivalent weight of Na/(Ni+Fe+Mn+Cu) = 0.85. The prepared mixture was input to an alumina crucible, sintered at 950 °C for 6 hours in an O₂ atmosphere, and then cooled to room temperature to prepare an O3-type Na_{0.85}Ni_{0.33}Fe_{0.31}Mn_{0.33}Cu_{0.02}O₂ positive electrode active material.

The prepared positive electrode active material was input to a reactor containing distilled water, washed with water at a temperature of 5 to 50 °C and a stirring speed of 350 rpm for 1 hour, and dried under vacuum conditions at a temperature of 120 °C for 12 hours.

30 g of 85 wt% of the prepared positive electrode active material, 10 wt% of carbon black, and 5 wt% of a PVdF binder were dispersed in N-methyl-2 pyrrolidone (NMP) to prepare a positive electrode slurry. The positive electrode slurry was uniformly applied on an aluminum thin film having a thickness of 15 µm and vacuum dried at 135 °C to manufacture a positive electrode for a sodium secondary battery.

A sodium secondary battery (coin cell) was manufactured using a sodium metal plate as a counter electrode to the positive electrode, porous glass fiber (thickness: 200 µm) as a separator, and an electrolyte in which NaPF₆ was present at a concentration of 1.0 M in a solvent in which propylene carbonate and fluoroethylene carbonate were mixed in a volume ratio of 98:2.

### (Comparative Example 1)

A positive electrode active material and a sodium secondary battery were manufactured in the same manner as in Example 1, except that the oxidative calcination process was not performed.

### (Comparative Example 2)

A positive electrode active material and a sodium secondary battery were manufactured in the same manner as in Example 1, except that the oxidative calcination process was not performed, and the NFM11 precursor and Cu(OH)₂ were mixed simultaneously with 2 at.% Cu and Na₂CO₃ at an equivalent weight of Na/(Ni+Fe+Mn+Cu) = 0.85 and then placed in an alumina crucible, and sintering was performed in an O₂ atmosphere at 950 °C for 6 hours.

### (Comparative Example 3)

A positive electrode active material and a sodium secondary battery were manufactured in the same manner as in Example 1, except that oxidative calcination and Cu dry doping were not performed.

### (Comparative Example 4)

A positive electrode active material and a sodium secondary battery were manufactured in the same manner as in Example 1, except that Co(OH)₂ was used instead of Cu(OH)₂.

### Experimental Examples

### Experimental Example 1: SEM-EDS mapping analysis of positive electrode active material particles

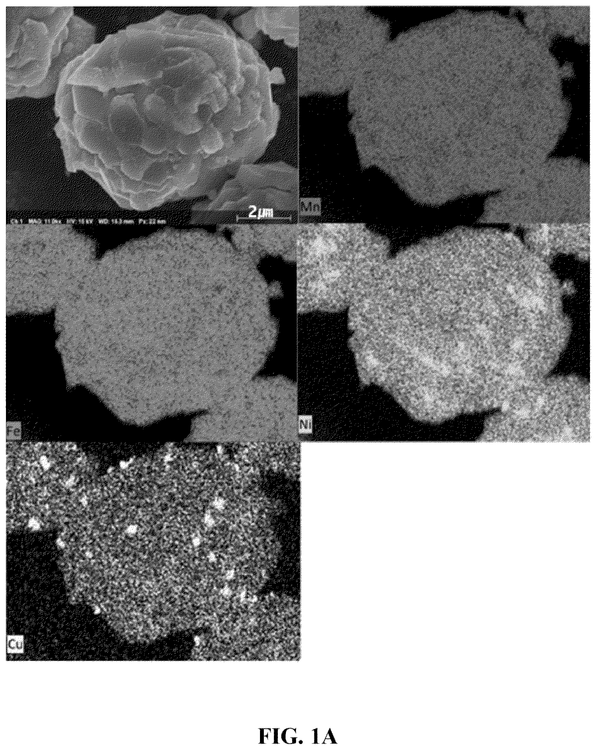

Surface SEM-EDS mapping analysis of the positive electrode active material particles prepared in Example 1 was performed, and the results are shown in FIG. 1A.

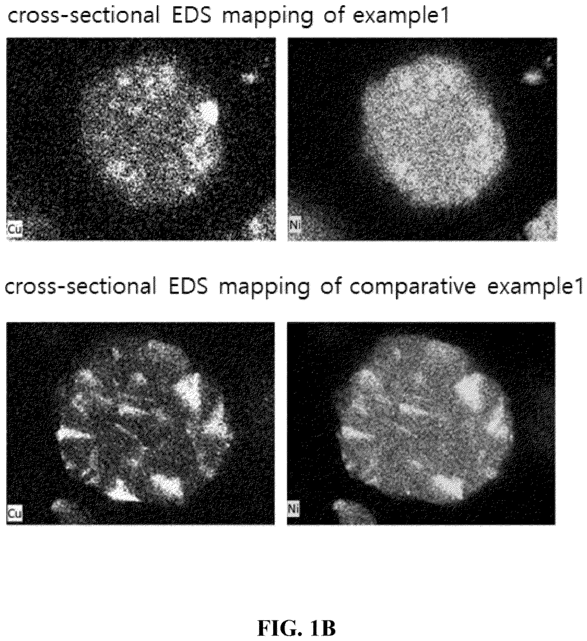

Cross-sectional SEM-EDS mapping analysis of the positive electrode active material particles prepared in Example 1 and Comparative Example 1 was performed, and the results are shown in FIG. 1B.

In FIG. 1A, it can be confirmed that Cu is partially aggregated on the surface of the secondary particle of the positive electrode active material of Example 1, but is doped relatively uniformly on the entire surface of the secondary particle.

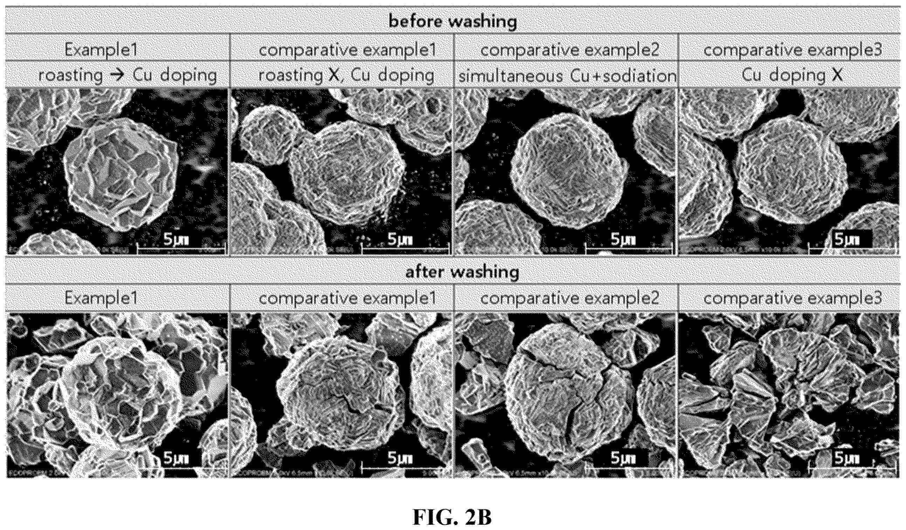

In FIG. 1B, it was confirmed that Cu was non-uniformly aggregated inside the secondary particles and on the surface of the primary particles, but in the case of Example 1, since the size of the primary particles increases compared to Comparative Example 1 (see FIG. 2B), it was confirmed that Cu is dispersed on the surface of the larger primary particles and Cu doping uniformity increases based on the cross section of the secondary particles.

As a result, although Cu was non-uniformly doped, referring to subsequent experimental examples, it was confirmed that the O3-type crystal structure was well maintained and the outflow (detachment) of Na in the lattice structure was prevented after washing the positive electrode active material with water.

### Experimental Example 2: Comparison of positive electrode active material particles before and after washing with water

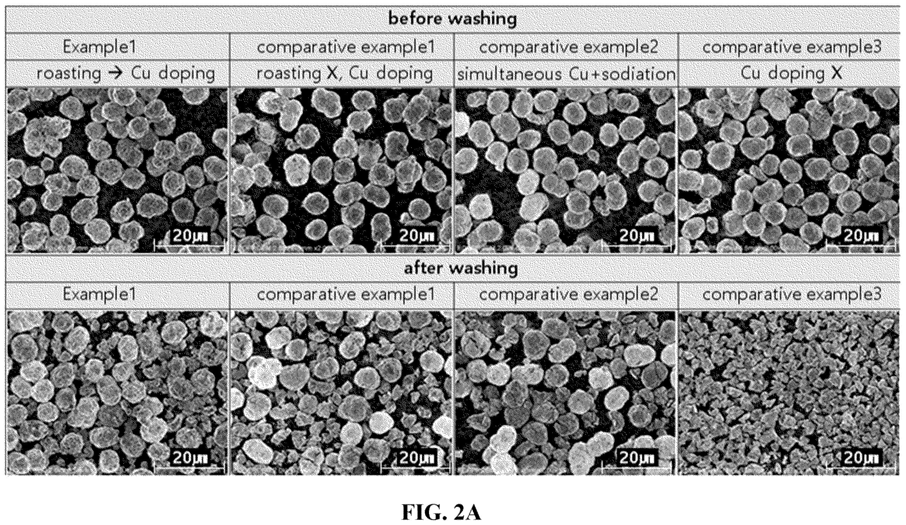

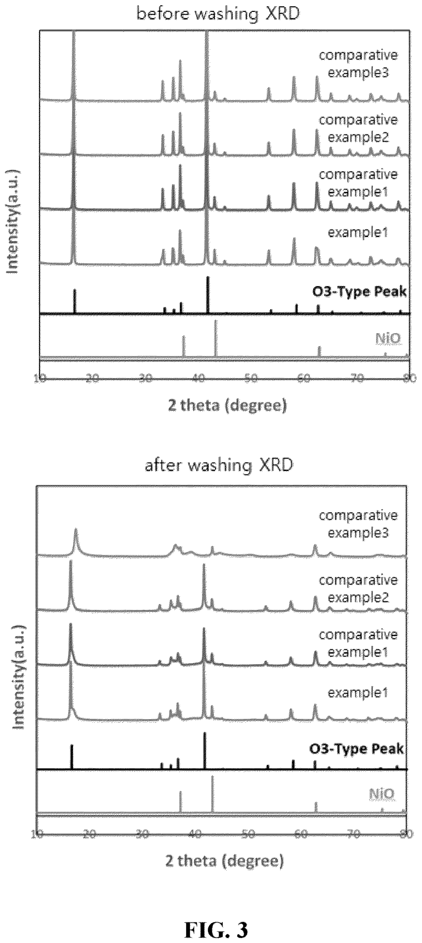

SEM and XRD comparative analyses of the positive electrode active material particles prepared in Example 1 and Comparative Examples 1 to 3 were performed before and after washing with water, and the results are shown in FIGS. 2A, 2B, and 3.

Referring to FIGS. 2A and 2B, when checking the SEM surface shape, it was confirmed that some secondary particles were broken after washing with water, and it was confirmed that in Example 1, the number of broken particles was the least, and in Comparative Example 3, most of the secondary particles were broken.

In addition, referring to FIG. 2B, in Example 1, as oxidative calcination proceeds, it can be seen that the average particle diameter (D1) (D50) of the plurality of primary particles constituting the secondary particles ranges from 800 nm to 2.5 µm, the average particle diameter (D2) (D50) of the secondary particles ranges from 6 to 12 µm, the aspect ratio of the primary particle ranges from 1:1 to 1:2.5, and the average particle size ratio (D2/D1) ranges from 2.5 to 10. On the other hand, it was confirmed that in Comparative Examples 1 to 3, the average particle diameter of the primary particles was smaller than that of Example 1, the aspect ratio of the primary particle was high, showing needle-type and rod-type shapes, and the average particle diameter ratio was relatively high, exceeding 10.

**[Table 1]**

| | (003) peak FWHM (2θ) |
|---|---|
| Example 1 | 0.1847 |
| Comparative Example 1 | 0.2957 |
| Comparative Example 2 | 0.2729 |
| Comparative Example 3 | 0.6619 |

Referring to FIG. 3 and Table 1, it was confirmed that as a result of XRD titration, the (003) peak, which is the main peak of the O3-type, appears in the range of 2θ from 15° to 17.5°, and the O3-type crystal structure is maintained after washing with water in Example 1. Specifically, the (003) peak FWHM was measured to be 0.1847.

On the other hand, it was confirmed that in Comparative Examples 1 to 3, the (003) peak FWHM increased to 0.27 to 0.66, and after washing with water, the O3-type crystal structure collapsed, and most particles were broken in Comparative Example 3, which had the highest (003) peak FWHM.

In addition, in Comparative Example 4, in which Co was doped instead of Cu, it was confirmed that most of the positive electrode active material particles were broken after washing with water.

### Experimental Example 3: Measurement of residual Na content (TTS)

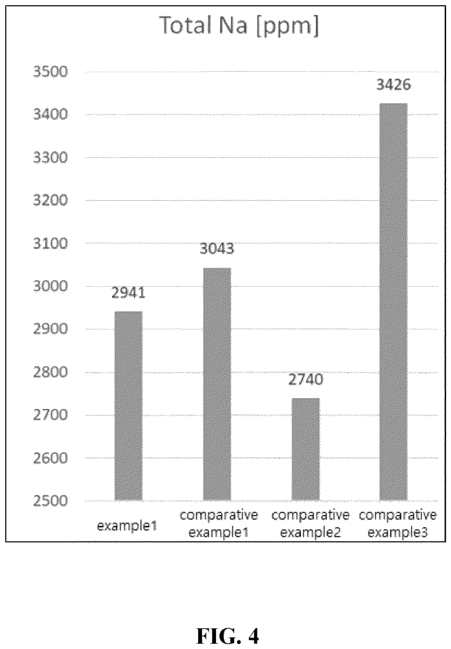

In Example 1 and Comparative Examples 1 to 3, the residual Na content on the surface of the positive electrode active material after washing with water was measured, and the results are shown in FIG. 4.

The content of residual sodium was measured for each compound (for example, NaOH or Na₂CO₃) including residual Na using a potentiometric neutralization titration method, and then the total amount of only Na was calculated separately to obtain the value (TTS, total sodium).

The calculation method is as shown in Calculation Formula 1 below. TTS (total Na) = NaOH analysis value (%) × Na/NaOH + Na2CO3 analysis value (%) × 2NaNa2CO3

Referring to Figure 4, in Example 1 and Comparative Examples 1 to 3, it was confirmed that the residual Na content (TTS) after water washing was low at around 3,000 ppm.

### Experimental Example 4: Battery performance evaluation

For the sodium secondary batteries manufactured in Example 1 and Comparative Examples 1 to 3, initial charge capacity, initial discharge capacity, initial reversible efficiency, and rate characteristics (discharge capacity ratio; rate capability (C-rate)) were measured through charge and discharge experiments in which 25 °C, a voltage range of 2.0 V to 4.6 V and a discharge rate of 0.1 C to 2.0 C were applied, using an electrochemical analysis device (Toyo, Toscat-3100).

In addition, the same sodium secondary battery was charged/discharged 50 times under the conditions of 25 °C, an operating voltage range of 2.5 V to 4.3 V, and 1 C/1 C, and then the ratio of the discharge capacity at the 50th cycle to the initial capacity (cycle capacity retention) was measured.

The measurement results are shown in Table 2 below.

**[Table 2]**

| | | | Example 1 | Comparative Example 1 | Comparative Example 2 | Comparative Example 3 |
|---|---|---|---|---|---|---|
| Initial (@25 °C) 0.1 C 2.5-4.3 V | CH. | mAh/g | 176.0 | 170.3 | 170.8 | 174.2 |
| | DCH. | | 160.4 | 158.3 | 158.6 | 160.7 |
| | Eff. | % | 91.1 | 92.9 | 92.9 | 92.2 |
| Rate characteristics 2 C/0.1 C | Rate | | 51.9 | 48.0 | 48.0 | 48.0 |
| Lifespan (@25 °C) 1 C/1 C 2.5-4.3 V | Cycle life (50cy.) | | 67.1 | 62.4 | 63.0 | 61.8 |
| | Voltage decay (50cy.) | | 92.3 | 86.3 | 87.3 | 86.5 |

Referring to Table 2, it was confirmed that Example 1 had the best electrochemical properties.

In the present invention, the breakage of secondary particles can be minimized even after washing with water. In relation to this, the (003) peak FWHM, which is the main peak of the O3-type, is maintained at the same level as before water washing, and residual Na on the particle surface can be removed to a low level while maintaining the O3-type crystal structure.

As described above, although the present invention has been shown and described with respect to specific embodiments, it will be apparent to those skilled in the art that the present invention can be modified and changed in various ways to the extent that it does not depart from the following claims.

## Claims

1. A positive electrode active material for a sodium secondary battery, comprising an O3-type sodium composite transition metal oxide containing at least sodium, a transition metal, and a doping metal,
wherein the sodium composite transition metal oxide is a secondary particle in which a plurality of primary particles are aggregated, and an aspect ratio of the primary particle ranges from 1:1 to 1:2.5.

2. The positive electrode active material of claim 1, wherein a ratio D2/D1 of an average particle diameter D2 of the secondary particle to an average particle diameter D1 of the primary particles ranges from 2.5 to 10.

3. The positive electrode active material of claim 1 or 2, wherein an average particle diameter D1 of the primary particles ranges from 0.8 to 2.5 µm, and an average particle diameter D2 of the secondary particle ranges from 6 to 12 µm.

4. The positive electrode active material of one of claims 1 to 3, wherein the doping metal is copper (Cu).

5. The positive electrode active material of one of claims 1 to4, wherein the sodium composite transition metal oxide is represented by the following Chemical Formula 1:
[Chemical Formula 1] Naₐ[CuₓM_{y}TM_{1-x-y}]O₂
in Chemical Formula 1,
TM is at least one selected from Co, Ni, Mn, and Fe,
M is at least one selected from P, Sr, Ba, Ti, Zr, W, Co, Mg, Al, Zn, Ce, Hf, Ta, F, Cr, V, Si, Y, Ga, Sn, Mo, Ge, Nd, B, Nb, and Gd, and
0.8<a<1.0, 0.01≤x≤0.1, 0≤y≤0.1, and 0.8≤1-x-y≤0.99.

6. The positive electrode active material of one of claims 1 to 5, wherein the positive electrode active material has a (003) peak full width at half maximum (FWHM) ranging from 0.1599 to 0.3399 at a 2θ of 15° to 17.5° in XRD analysis.

7. The positive electrode active material of one of claims 1 to 6, wherein the positive electrode active material has a residual Na content (TTS, total sodium) ranging from 100 to 3,000 ppm.

8. A method of preparing a positive electrode active material for a sodium secondary battery, comprising:
a process of calcining a transition metal hydroxide precursor;
a process of dry mixing the calcined precursor prepared in the calcining process and a doping metal compound; and
a process of mixing the metal-doped calcined precursor prepared in the dry mixing process and a sodium compound in an equivalent weight of Na/M (total metals excluding Na) = greater than 0.8 and less than 1, and then sintering the mixture.

9. The method of claim 8, wherein the calcining process is performed at a temperature of 700 to 1,100 °C in an oxidizing atmosphere.

10. The method of claim 8 or 9, wherein in the dry mixing process, the doping metal compound is an acetate compound, sulfide, nitride, phosphide, oxide, oxyhydroxide, or hydroxide of copper (Cu), or a combination thereof.

11. The method of one of claims 8 to 10, wherein the sintering process is performed at a temperature of 800 to 1,100 °C.

12. The method of one of claims 8 to 11, further comprising a process of washing the sodium transition metal oxide prepared in the sintering process with water.

13. A positive electrode for a sodium secondary battery, comprising the positive electrode active material of one of claims 1 to 7.

14. A sodium secondary battery comprising the positive electrode of claim 13 and a negative electrode.
